# EUROPEAN PATENT SPECIFICATION

(11) **EP 4 084 452 B1**
(45) Date of publication and mention of the grant of the patent: **20.08.2025**
(21) Application number: 21171549.5
(22) Date of filing: 30.04.2021
(51) Int. Cl.: H04M 15/00, H04W 48/18

(54) **APPARATUS, METHOD AND COMPUTER PROGRAM**
VORRICHTUNG, VERFAHREN UND COMPUTERPROGRAMM
APPAREIL, PROCÉDÉ ET PROGRAMME INFORMATIQUE

(43) Date of publication of application: 02.11.2022
(73) Proprietor: Nokia Technologies Oy, 02610 Espoo (FI)
(72) Inventor: RODRIGUES, Joao Antonio Pereira, 1600-097 Lisbon (PT); MWANJE, Stephen, 84405 Dorfen (DE)
(74) Representative: Page White Farrer

(56) References cited:
- WO-A1-2019/005067

## Description

### Field

The present application relates to a method, apparatus, system and computer program and in particular but not exclusively to charging associated with a service instance, for example a network slice instance.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standards are the so-called 5G standards.

WO2019005067 discloses systems, methods, and software for selecting a network slice for User Equipment (UE) in a network that is partitioned into network slices. In one embodiment, a slice selection server receives an attach request initiated by the UE to attach to the network, sends a request to a policy control server to obtain a slice selection policy for the UE, and receives a response from the policy control server indicating a plurality of charging rules for the UE that are each mapped to a different one of the network slices. The slice selection server selects a network slice for the UE based on the charging rules, and sends an attach response to the UE that includes a network slice identifier (ID) for the network slice selected for the UE.

### Summary

According to the invention, there is provided an apparatus as defined in claim 1

The determining charging requirements for charging associated with the network slice instance may comprise obtaining the charging requirements from a charging service provider.

The determining charging requirements for charging associated with the network slice instance may comprise invoking a network slice instance charging allocation procedure.

The information relating to the charging profile may comprise information defining the charging profile.

The information relating to the charging profile may comprise information identifying the charging profile.

According to the invention, there is also

According to the invention, there is also provided a computer program comprising computer code according to claim 7.

### Brief Description of the Figures

Embodiments will now be described, by way of example only, with reference to the accompanying Figures in which:
Figure 1 shows a schematic diagram of an example 5G system with an end-to-end service management domain;
Figure 2 shows a schematic diagram of an example apparatus;
Figure 3 schematically shows an overview of the network slice life-cycle management operations;
Figure 4 schematically shows a network slice instance end to end view;
Figure 5 schematically shows a network slice creation and modification with a charging instance of some embodiments;
Figure 6 shows a first method of some embodiments;
Figure 7 shows a second method of some embodiments; and
Figure 8 shows a third method of some embodiments.

### Detailed Description of the Figures

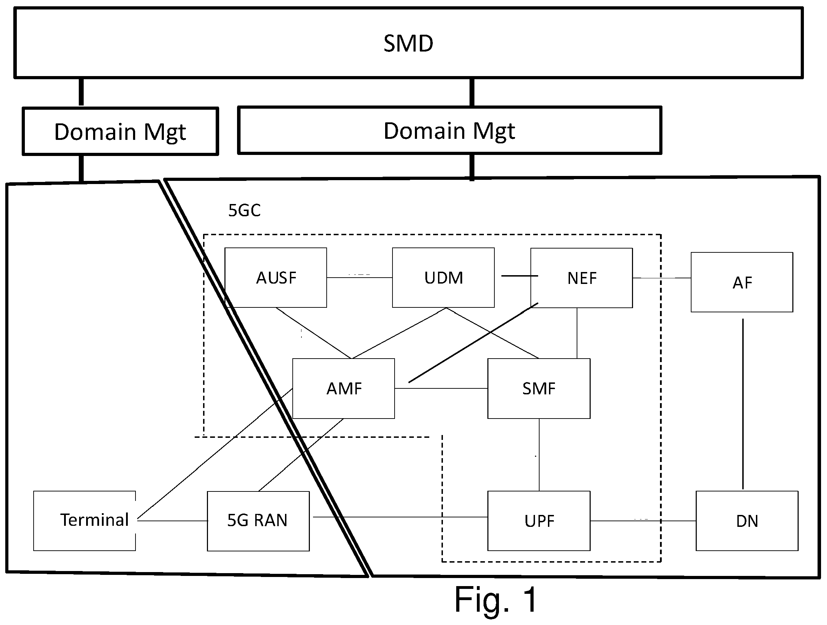

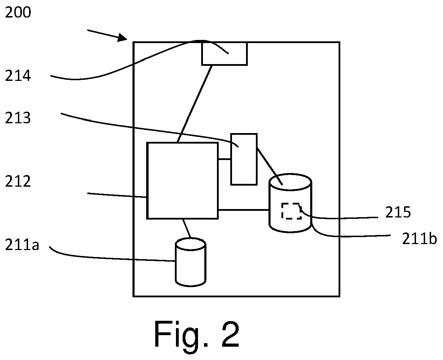

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, are briefly explained with reference to Figures 1, and 2 to assist in understanding the technology underlying the described examples.

Figure 1 shows a schematic representation of a 5G system (5GS) with an end-to-end service management domain (SMD). (The SMD part is described in more detail later). The 5GS may be comprised by a terminal or user equipment (UE), a 5G radio access network (5GRAN) or next generation radio access network (NG-RAN), a 5G core network (5GC), one or more application functions (AF) and one or more data networks (DN).

The 5G-RAN may comprise one or more base stations. In 5G the base station may be referred to as a gNodeB (gNB). The RAN may comprise one or more gNodeB (gNB) (or base station) distributed unit functions connected to one or more gNodeB (gNB) (or base station) centralized unit functions.

The 5GC may comprise the following entities: one or more access management functions (AMF), one or more session management functions (SMF), an authentication server function (AUSF), a unified data management (UDM), one or more user plane functions (UPF), and/or a network exposure function (NEF).

Figure 2 illustrates an example of an apparatus 200. This apparatus may be provided for example in a network slice management service consumer, a network slice management service provider or a network slice charging management service provider. The apparatus may comprise at least one memory. By way of example only the at least one memory may comprise random access memory (RAM) 211a and at least on read only memory (ROM) 211b. Apparatus used by other embodiments may comprise different memory.

The apparatus may comprise at least one processor 212, 213. In this example apparatus, two processors are shown.

The apparatus may comprise an input/output interface 214.

The at least one processor may be coupled to the at least one memory. The at least one processor may be configured to execute an appropriate software code 215. The software code 215 may for example allow the method of some embodiments to be performed.

The software code 215 may be stored in the at least one memory, for example ROM 211b.

Network slicing is provided in 5G. Network slicing supports different services using the same underlying mobile network infrastructure.

Network slices can differ in their service requirements. For example the service requirement may be an ultra-reliable low latency communication (URLLC) service requirement or an enhanced mobile broadband (eMBB) service requirement. Network slices can differ in the tenant that provides those services.

The concept of end-to-end network slicing may follow the ideas of Software-Defined Networking (SDN) and Network Function Virtualization (NFV) to provide several virtual networks, the so-called network slices, on top of one physical network infrastructure. A Network Slice Instance (NSI) is modelled as a Network Slice Subnet Instance (NSSI) that is exposed as a virtual network. Each NSSI may in turn use several constituent NSSIs or network functions (NF), for example different mobile network domains such as the Radio Access Network (RAN) or Core network.

The lifecycle management of communication services may involve multiple management processes that rely on the interaction between an end-to-end service management domain (SMD) and the different technology domains that work together to fulfil the communication services. One example of this is specified by the ETSI ZSM framework - ETSI GS ZSM 008 V0.5.0 (2021-01): "Zero-touch network and Service Management (ZSM); Cross-domain E2E Service Lifecycle Management ". As can be seen from Figure 1, the SMD sits above various domains. The 5G system may be regarded as being made up a "radio domain" and a "core network" domain. Each domain may be associated with a domain management function which sits between the respective domain and the SMD. It should be noted that there may be one or more additional domains provided in some embodiments. In some embodiments, the 5G system may be provided by a single domain.

Before a service can be instantiated, preliminary processes may be needed to allow the different parties that contribute to the service to agree on the details about the service. By way of example, the service may be provided by a network slice instance (NSI). A NSI is an example implementation of an end-to-end communication service. The preparation for a NSI may comprise the design and onboarding of the network slice.

Currently, the data used for the service creation generally relates to guaranteeing the operation of service instance. However, currently, charging related information is not considered.

In some embodiments, there may be one or more use cases which may require specific charging information to be linked to the service. This may be in order to cope with respective requirements. The requirements may be any suitable requirements such as latency and number of UEs.

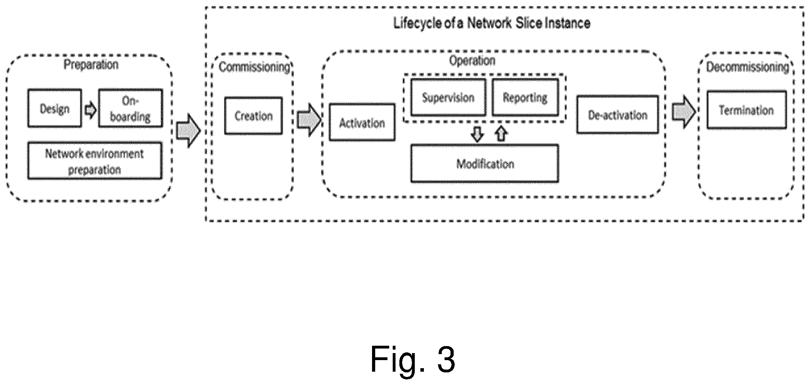

Network slice Life-Cycle Management (LCM) refers to the management operations required to create and decommission an NSI and to manage and optimize it at runtime. Figure 3 depicts an example overview of the network slice LCM operations.

A first, preparation, stage includes design, on-boarding and network environment preparation. The lifecycle of a NSI includes a commissioning phase (which includes the creation of the network slice), an operation phase (which includes activation and deactivation of the network slice as well as modification in response to supervision and reporting) and a decommissioning phase (which includes the termination of the network slice).

Figure 3 thus schematically shows the different phases for provisioning a NSI (NSSI (network slice subnet instance) creation, NSSI activation; NSSI de-activation, NSSI modification, and NSSI termination.

Some embodiments may provide an apparatus and/or method to instantiate network slices. This may be with a consideration of the charging characteristics that are specific to the slice instances. This may be provided in the network slice charging management service responsible for managing a service charging instance. Some embodiments may allow for the defining of an **NSI** with information relating to service charging.

Some embodiments may provide a charging data model. Some embodiments may provide a charging management service. This may be separated from the existing network slice management services or in some embodiments be provided as part of those latter services.

Currently, a NSI contains operational information on the network functions (NF) and metrics needed to support the NSI. Charging currently is by the providing charging information within the corresponding business solution which is accessible during the runtime through the Charging Function (CHF). This may limit the service onboarding, because it may need to know the charging plan to be associated with the correspondent service, but this is only invokable after the service is instantiated through the CHF.

Some embodiments may provide NSI creation and/or activation processes to allow for differentiated handling of the NSI creation and/or according to applicable charging information for the respective NSI.

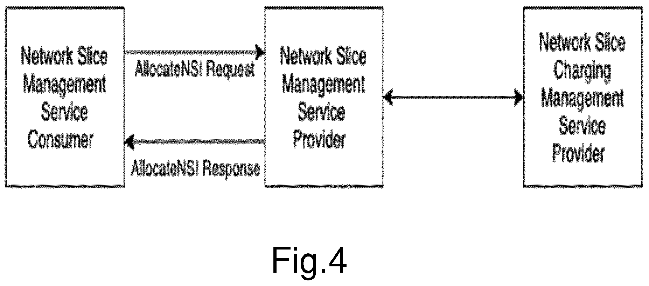

Reference is made to Figure 4 which schematically shows a network slice instance end to end view. As shown in Figure 4, there is a network slice management service consumer which communicates with a network slice management service provider. The network slice management service consumer may be an operator, a third party service organization or any other suitable network slice management service consumer. The network slice management service provider may be a network function which provides the required management capabilities required by the network slices. The network slice management service consumer may send a request for the allocation of a network slice instance (NSI) to the network slice management service provider. The network slice management service provider may provide a response to the request to the network slice management service consumer. The network slice management service provider communicates with a network slice charging management service provider. The network slice charging management service provider may be part of the service or slice management system within the SMD or part of the slice management within the 5G network domain management.

In some embodiments, charging information is provided as a part of a service offer descriptor. The service descriptor is provided with charging related attributes. These charging related attributes are to be considered in the instantiation of the slice.

Some embodiments provide a mechanism for a slice request to include information about the charging characteristics of the to-be-provided slice.

In some embodiments, the network slice charging management service provider may derive the charging related requirements to be considered on slice instantiation.

In some embodiments, the network slice charging management service provider may associate the slice instance with the derived charging requirements.

In some embodiments, after allocating the network slice instance (NSI), the network slice charging management service provider may provide information about the allocation of the NSI which may indicate the associated charging requirements.

The charging attributes that are included in service offer descriptor may comprise one or more of the following attributes:
charging event; charging currency; charging units; quota; and charging policy.

The charging event field may allow a service to be charged in real-time (for example real time charging when online), near real-time (this may for example be used when offline) and per session. Other options may be alternatively or additionally supported in other embodiments.

The charging units may represent the price that the service costs to the consumer of the service.

The charging currency allows a service to be consumed by the ledger of the consumer. The currency may be a government issued currency or a virtual currency such as a blockchain based currency. The currency may be any other suitable currency or associated payment mechanism.

The charging policy may comprise one or more policy rules that are applied to the service.

The quota represents a value which is reserved for the service. This may be one or more of a duration, a volume, and a bandwidth.

The following table gives one example of the attributes that may be available on the service data model in some embodiments. It should be noted that "O" in the presence column indicates that the attribute is optional.

| Attribute | Presence | Measurement Unit | Allowed Values | Description |
|---|---|---|---|---|
| Charging Event | O | enum | [RealTime; Near RealTime; Session[ | This field will allow a service to be charged in real-time (exonline), near realtime (ex-offline) and per session |
| Charging Currency | O | enum | Virtual; Fiat | This field would allow a service to be consumed by the Consumer own ledger |
| Charging Units | O | Integer | 0... 99999999 | Represents the price that service costs to the one that consumes it |
| Quota | O | Time Stamp Seconds, kbps | Duration, volume, bandwidth | Value that will be reserved for the Service |
| Charging Policy | O | enum | [CPR1; CPR2, ....] | Policy (rules) applied to the service |

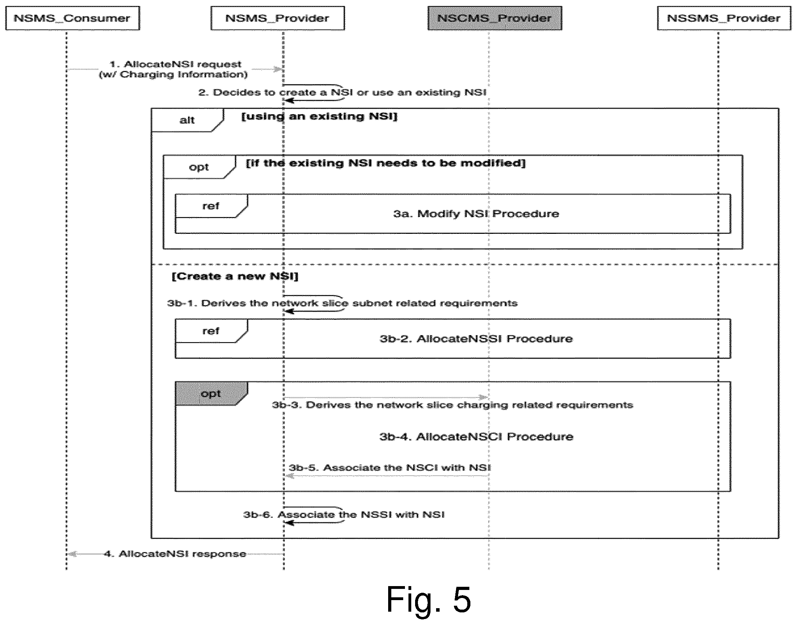

Reference is made to Figure 5 which shows a network slice creation and modification with a charging instance of some embodiments. As shown in Figure 5, the charging data is available at the end to end flow, either on its creation or modification.

In step 1, the network slice management service provider (NSMS_Provider) receives an allocate a NSI (AllocateNSI) request from the network slice management service consumer (NSMS_Consumer) with the network slice related requirements. The request includes or points to the desired charging profile. This may be defined by one or more of the charging attributes with associated values. A charging profile may be associated with one or more sets of charging related requirements. A set of charging related requirements may comprise one or more attributes and one or more values associated with each attribute.

In step 2, based on the network slice related requirements, the NSMS_Provider decides whether to use an existing NSI or create a new NSI. If the network slice related requirements allow the requested NSI to be shared and if an existing suitable NSI can be reused, the NSMS_Provider may decide to use an existing NSI.

Thus the NSMS_Provider may use an existing NSI, modify an existing NSI or create a new NSI.

If an existing NSI can be used, then that that NSI is used.

If an existing NSI needs to be modified to satisfy the network slice related requirements, the NSMS_Provider invokes the procedure to modify the existing NSI in step 3a.

If a new NSI needs to be created to satisfy the network slice related requirements, the NSMS_Provider invokes the procedure to create a new NSI in step 3b.

In step 3b-1, the NSMS_Provider derives the network slice subnet related requirements from the received network slice related requirements. Before the NSMS_Provider derives the network slice subnet related requirements, the NSMS_Provider may invoke a corresponding network slice subnet capability information querying procedure.

In step 3b-2, the NSMS_Provider invokes the NSSI allocation procedure.

In step 3b-3, if creating a new NSI, after the NSMS_Provider derives the network slice subnet related requirements from the received network slice related requirements, then the network slice charging management service provider (NSCMS_Provider) derives the necessary charging related requirements from the specified charging profile.

In step 3b-4, the NSCMS Provider invokes the NSCI (network slice charging instance) allocation procedure. The NSCMS can propose (analytics use case support) a charging profile based on service related information. The NSCI is a logical object in the management system that represents a complex grouping of resources which can support service charging operations.

In step 3b-5, the NSCMS_Provider creates the MOI (managed object instance) for NSI according to NSCI and configures the MOI with the DN (distinguished name) of MOI. Other configuration information may be configured for the created MOI.

In step 3b-6, the NSMS_Provider creates the MOI for NSI and configures the MOI with the DN of MOI for the NSSI, other configuration information may be configured for the created MOI.

In step 4, regardless as to how the NSI is allocated, the NSMS_Provider sends the NSI allocation result to the NSMS_Consumer. If an existing NSI is modified or a new NSI is created successfully to satisfy the network slice related requirements, the result includes the relevant network slice instance information.

Thus in some embodiments, a charging instance is created during the NSI creation process. This is in contrast with current arrangements where any charging related instantiation/operation would be done after NSI creation process is finished.

Some embodiments may make available the possibility to charge services that are delivered at the edge.

Some embodiments, may make available the possibility to charge may have latencies of less than 10 ms.

Some embodiments, may make available the possibility to charge in runtime.

Some embodiments, may make available the possibility to charge services that are delivered at the edge, which may have latencies of less than 10 ms and which may require charging in runtime.

Some embodiments, may provide charging attributes for the service data model.

Specific Charging Management Instance is now available for covering BSS aspects which were previously only available through CHF. Previous proposals were such that an operation related to charging was performed after instantiation of the network slice and respective activation of a service through CHF (acting as a proxy). In contrast, some embodiments provide that the service is provided with the specific charging instance during design (at the same level as the definition of the required resources which support the service for operation). The specific charging instance is thus known when the network resources are being validated and reserved. This may lead to the convergence between the BSS (business support system) and the OSS (operating support system).

Some embodiments may provide a network slice information model which includes charging characteristics. The charging characteristics may be manipulated through CRUD (create, read, update, delete) operations.

Some embodiments provide charging information in an allocation of a NSI request for example. For example the allocateNSI request may include charging.

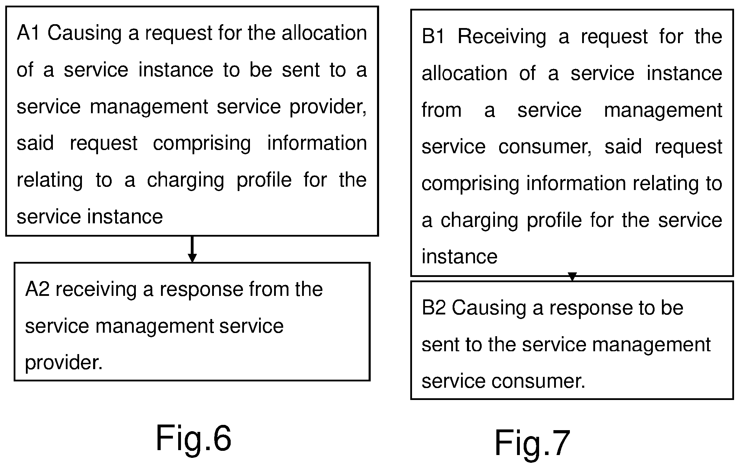

Reference is made to Figure 6 which shows a method. The method may be performed by an apparatus. This apparatus may be as described in relation to Figure 2. The apparatus may be provided by or in a service management service consumer. The apparatus may be provided in or by a network slice management service consumer.

The method may comprise in step A1 causing a request for the allocation of a service instance to be sent to a service management service provider. The request comprise information relating to a charging profile for the service instance.

The method may comprise in step A2, receiving a response from the service management service provider.

Reference is made to Figure 7 which shows a method. The method may be performed by an apparatus. This apparatus may be as described in relation to Figure 2. The apparatus may be provided in or by a service management service provider. The apparatus may be provided in or by a network slice management service provider.

The method may comprise in step B1 receiving a request for the allocation of a service instance from a service management service consumer. The request comprises information relating to a charging profile for the service instance.

The method may comprise in step B2 causing a response to be sent to the service management service consumer.

Reference is made to Figure 7 which shows a method. The method may be performed by an apparatus. This apparatus may be as described in relation to Figure 2. The apparatus may be provided in or by a service charging management service provider. The apparatus may be provided in or by a network slice charging management service provider.

The method may comprise in step C1 receiving a request from a service management service provider to invoke a service charging instance procedure using information relating to a charging profile for a service instance.

The method may comprise in step C2, in response to the request, invoking a service charging instance to provide a charging managed object instance for the service instance.

Some embodiment have used a network slice instance. It should be appreciated that this is by way of example only and other embodiments may use any suitable service instance.

It will be understood that although the above concepts have been discussed in the context of a 5GS, one or more of these concepts may be applied to other cellular systems.

It is noted that while the above describes example embodiments, there are several variations and modifications which may be made to the disclosed solution without departing from the scope of the present invention.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

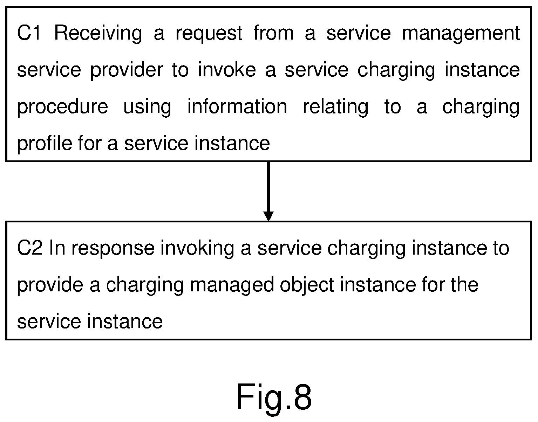

The embodiments may be implemented by computer software stored in a memory and executable by at least one data processor of the involved entities or by hardware, or by a combination of software and hardware. Further in this regard it should be noted that any procedures, e.g., as in Figures 5 to 8, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims.

## Claims

1. A network slice management service provider apparatus comprising means configured to:
receive a request for the allocation of a network slice instance from a network slice management service consumer, said request comprising network slice related requirements, said network slice related requirements comprising information relating to a charging profile for the network slice instance, the charging profile associated with one or more sets of charging related requirements, a set of charging related requirements comprising one or more attributes and one or more values associated with each attribute;
responsive to receiving the request, determine that a network slice instance is to be created;
deriving network slice subnet related requirements from the received network slice related requirements, wherein charging requirements for charging associated with the network slice instance are determined using the information relating to the charging profile;
invoking a network slice subnet instance allocation procedure, and creating a managed object instance for the network slice instance;
configuring the network slice subnet instance with a distinguished name of the managed object instance for the network slice instance; and
cause a response to be sent to the network slice management service consumer, where a network slice instance is created successfully to satisfy the network slice related requirements, the result of the network slice instance allocation includes relevant network slice information.

2. The apparatus as claimed in claim 1, wherein the determining charging requirements for charging associated with the network slice instance comprises obtaining the charging requirements from a charging service provider.

3. The apparatus as claimed in claim 1 or 2, wherein the determining charging requirements for charging associated with the network slice instance comprises invoking a network slice instance charging allocation procedure.

4. The apparatus as claimed in any preceding claim, wherein the information relating to the charging profile comprises information defining the charging profile.

5. The apparatus as claimed in any of claims 1 to 4, wherein the information relating to the charging profile comprises information identifying the charging profile.

6. A method comprising:
receiving a request for the allocation of a network slice instance from a network slice management service consumer, said request comprising network slice related requirements, said network slice related requirements comprising information relating to a charging profile for the network slice instance, the charging profile associated with one or more sets of charging related requirements, a set of charging related requirements comprising one or more attributes and one or more values associated with each attribute;
responsive to receiving the request, determining that a network slice instance is to be created;
deriving network slice subnet related requirements from the received network slice related requirements, wherein charging requirements for charging associated with the network slice instance are determined using the information relating to the charging profile;
invoking a network slice subnet instance allocation procedure, and creating a managed object instance for the network slice instance;
configuring the network slice subnet instance with a distinguished name of the managed object instance for the network slice instance; and
causing a response to be sent to the network slice management service consumer, said response comprising a result of the network slice instance allocation, where a network slice instance is created successfully to satisfy the network slice related requirements, the result of the network slice instance allocation includes relevant network slice information.

7. A computer program comprising computer executable code which run on at least one processor causes the method of claim 6 to be performed.

## Patentansprüche

1. Dienstanbietervorrichtung für eine Netzwerksliceverwaltung, die Mittel umfasst, die zu Folgendem ausgelegt sind:
Empfangen einer Anforderung einer Zuteilung einer Netzwerksliceinstanz von einem Dienstverbraucher für eine Netzwerksliceverwaltung, wobei die Anforderung netzwerkslicebezogene Voraussetzungen umfasst, wobei die netzwerkslicebezogenen Voraussetzungen Informationen umfassen, die sich auf ein Abrechnungsprofil für die Netzwerksliceinstanz beziehen, wobei das Abrechnungsprofil mit einem oder mehreren Sätzen von abrechnungsbezogenen Voraussetzungen verknüpft ist, wobei ein Satz von abrechnungsbezogenen Voraussetzungen ein oder mehrere Attribute und einen oder mehrere Werte, die mit jedem Attribut verknüpft sind, umfasst;
Bestimmen, dass eine Netzwerksliceinstanz zu erstellen ist, in Reaktion auf das Empfangen der Anforderung;
Ableiten von Voraussetzungen, die sich auf ein Netzwerksliceunternetz beziehen, von den empfangenen Voraussetzungen, die sich auf die Netzwerkslice beziehen, wobei Abrechnungsvoraussetzungen zur Abrechnung, die mit der Netzwerksliceinstanz verknüpft ist, unter Verwendung der Informationen bestimmt werden, die sich auf das Abrechnungsprofil beziehen;
Aufrufen einer Zuteilungsprozedur für eine Netzwerksliceunternetzinstanz und Erstellen einer verwalteten Objektinstanz für die Netzwerksliceinstanz;
Auslegen der Netzwerksliceunternetzinstanz mit einem eindeutigen Namen der verwalteten Objektinstanz für die Netzwerksliceinstanz; und
Veranlassen, dass eine Antwort an den Dienstverbraucher für die Netzwerksliceverwaltung gesendet wird, wenn eine Netzwerksliceinstanz erfolgreich erstellt wird, um die netzwerkslicebezogenen Voraussetzungen zu erfüllen, wobei das Ergebnis der Zuteilung der Netzwerksliceinstanz relevante Netzwerksliceinformationen beinhaltet.

2. Vorrichtung nach Anspruch 1, wobei das Bestimmen von Abrechnungsvoraussetzungen für eine Abrechnung, die mit der Netzwerksliceinstanz verknüpft ist, das Erhalten der Abrechnungsvoraussetzungen von einem Abrechnungsdienstanbieter umfasst.

3. Vorrichtung nach Anspruch 1 oder 2, wobei das Bestimmen von Abrechnungsvoraussetzungen für eine Abrechnung, die mit der Netzwerksliceinstanz verknüpft ist, das Aufrufen einer Zuteilungsprozedur zur Abrechnung einer Netzwerksliceinstanz umfasst.

4. Vorrichtung nach einem der vorhergehenden Ansprüche, wobei die Informationen, die sich auf das Abrechnungsprofil beziehen, Informationen umfassen, die das Abrechnungsprofil definieren.

5. Vorrichtung nach einem der Ansprüche 1 bis 4, wobei die Informationen, die sich auf das Abrechnungsprofil beziehen, Informationen umfassen, die das Abrechnungsprofil identifizieren.

6. Verfahren, das Folgendes umfasst:
Empfangen einer Anforderung einer Zuteilung einer Netzwerksliceinstanz von einem Dienstverbraucher für eine Netzwerksliceverwaltung, wobei die Anforderung netzwerkslicebezogene Voraussetzungen umfasst, wobei die netzwerkslicebezogenen Voraussetzungen Informationen umfassen, die sich auf ein Abrechnungsprofil für die Netzwerksliceinstanz beziehen, wobei das Abrechnungsprofil mit einem oder mehreren Sätzen von abrechnungsbezogenen Voraussetzungen verknüpft ist, wobei ein Satz von abrechnungsbezogenen Voraussetzungen ein oder mehrere Attribute und einen oder mehrere Werte, die mit jedem Attribut verknüpft sind, umfasst;
Bestimmen, dass eine Netzwerksliceinstanz zu erstellen ist, in Reaktion auf das Empfangen der Anforderung;
Ableiten von Voraussetzungen, die sich auf ein Netzwerksliceunternetz beziehen, von den empfangenen Voraussetzungen, die sich auf die Netzwerkslice beziehen, wobei Abrechnungsvoraussetzungen zur Abrechnung, die mit der Netzwerksliceinstanz verknüpft ist, unter Verwendung der Informationen bestimmt werden, die sich auf das Abrechnungsprofil beziehen;
Aufrufen einer Zuteilungsprozedur für eine Netzwerksliceunternetzinstanz und Erstellen einer verwalteten Objektinstanz für die Netzwerksliceinstanz;
Auslegen der Netzwerksliceunternetzinstanz mit einem eindeutigen Namen der verwalteten Objektinstanz für die Netzwerksliceinstanz; und
Veranlassen, dass eine Antwort an den Dienstverbraucher für die Netzwerksliceverwaltung gesendet wird, wobei die Antwort ein Ergebnis der Zuteilung der Netzwerksliceinstanz umfasst, wenn eine Netzwerksliceinstanz erfolgreich erstellt wird, um die netzwerkslicebezogenen Voraussetzungen zu erfüllen, wobei das Ergebnis der Zuteilung der Netzwerksliceinstanz relevante Netzwerksliceinformationen beinhaltet.

7. Computerprogramm, das computerausführbaren Code umfasst, der, wenn er auf mindestens einem Prozessor läuft, das Durchführen des Verfahrens von Anspruch 6 veranlasst.

## Revendications

1. Appareil de fournisseur de services de gestion de tranches de réseau comprenant des moyens configurés pour :
recevoir une demande pour l'allocation d'une instance de tranche de réseau d'un consommateur de service de gestion de tranches de réseau, ladite demande comprenant des exigences liées à la tranche de réseau, lesdites exigences liées à la tranche de réseau comprenant des informations relatives à un profil de tarification pour l'instance de tranche de réseau, le profil de tarification étant associé à un ou plusieurs ensembles d'exigences liées à la tarification, un ensemble d'exigences liées à la tarification comprenant un ou plusieurs attributs et une ou plusieurs valeurs associées à chaque attribut ;
en réponse à la réception la demande, déterminer qu'une instance de tranche de réseau doit être créée ;
dériver des exigences liées au sous-réseau de tranche de réseau à partir des exigences liées à la tranche de réseau reçues, dans lequel des exigences de tarification pour la tarification associée à l'instance de tranche de réseau sont déterminées à l'aide des informations relatives au profil de tarification ;
invoquer une procédure d'allocation d'instance de sous-réseau de tranche de réseau, et créer une instance d'objet géré pour l'instance de tranche de réseau ;
configurer l'instance de sous-réseau de tranche de réseau avec un nom distinctif de l'instance d'objet géré pour l'instance de tranche de réseau ; et
provoquer l'envoi d'une réponse au consommateur de service de gestion de tranches de réseau lorsqu'une instance de tranche de réseau est créée avec succès pour répondre aux exigences liées à la tranche de réseau, le résultat de l'allocation d'instance de tranche de réseau comporte des informations de tranche de réseau pertinentes.

2. Appareil selon la revendication 1, dans lequel la détermination des exigences de tarification pour la tarification associée à l'instance de tranche de réseau comprend l'obtention des exigences de tarification auprès d'un fournisseur de services de tarification.

3. Appareil selon la revendication 1 ou 2, dans lequel la détermination des exigences de tarification pour la tarification associée à l'instance de tranche de réseau comprend l'invocation d'une procédure d'allocation de tarification d'instance de tranche de réseau.

4. Appareil selon l'une des revendications précédentes, dans lequel les informations relatives au profil de tarification comprennent des informations définissant le profil de tarification.

5. Appareil selon l'une des revendications 1 à 4, dans lequel les informations relatives au profil de tarification comprennent des informations identifiant le profil de tarification.

6. Procédé comprenant les étapes suivantes :
recevoir une demande pour l'allocation d'une instance de tranche de réseau d'un consommateur de service de gestion de tranches de réseau, ladite demande comprenant des exigences liées à la tranche de réseau, lesdites exigences liées à la tranche de réseau comprenant des informations relatives à un profil de tarification pour l'instance de tranche de réseau, le profil de tarification étant associé à un ou plusieurs ensembles d'exigences liées à la tarification, un ensemble d'exigences liées à la tarification comprenant un ou plusieurs attributs et une ou plusieurs valeurs associées à chaque attribut ;
en réponse à la réception la demande, déterminer qu'une instance de tranche de réseau doit être créée ;
dériver des exigences liées au sous-réseau de tranche de réseau à partir des exigences liées à la tranche de réseau reçues, dans lequel des exigences de tarification pour la tarification associée à l'instance de tranche de réseau sont déterminées à l'aide des informations relatives au profil de tarification ;
invoquer une procédure d'allocation d'instance de sous-réseau de tranche de réseau, et créer une instance d'objet géré pour l'instance de tranche de réseau ;
configurer l'instance de sous-réseau de tranche de réseau avec un nom distinctif de l'instance d'objet géré pour l'instance de tranche de réseau ; et
provoquer l'envoi d'une réponse au consommateur de service de gestion de tranches de réseau, ladite réponse comprenant un résultat de l'allocation d'instance de tranche de réseau lorsqu'une instance de tranche de réseau est créée avec succès pour répondre aux exigences liées à la tranche de réseau, le résultat de l'allocation d'instance de tranche de réseau comporte des informations de tranche de réseau pertinentes.

7. Programme informatique comprenant un code exécutable par ordinateur qui, exécuté sur au moins un processeur, provoque la réalisation du procédé selon la revendication 6.
